# EUROPÄISCHE PATENTSCHRIFT

(11) **EP 0 836 785 B1**
(45) Veröffentlichungstag und Bekanntmachung des Hinweises auf die Patenterteilung: **18.04.2001**
(21) Anmeldenummer: 96916011.8
(22) Anmeldetag: 13.06.1996
(51) Int. Cl.: H04N 7/50, H04N 7/46

(54) **VERFAHREN ZUR DEKODIERUNG UND KODIERUNG EINES KOMPRIMIERTEN VIDEODATENSTROMS MIT REDUZIERTEM SPEICHERBEDARF**
PROCESS FOR DECODING AND CODING A COMPRESSED VIDEO DATA STREAM WITH REDUCED MEMORY REQUIREMENTS
DECODAGE ET CODAGE D'UN COURANT COMPRIME DE DONNEES VIDEO A ENCOMBREMENT EN MEMOIRE REDUIT

(30) Priorität: 06.07.1995 DE 19524688
(43) Veröffentlichungstag der Anmeldung: 22.04.1998
(73) Patentinhaber: Infineon Technologies AG, 81669 München (DE)
(72) Erfinder: GEIB, Heribert, D-85567 Grafing (DE); PRANGE, Stefan, D-81476 München (DE)
(74) Vertreter: Zedlitz, Peter, Dipl.-Inf.
(86) Internationale Anmeldenummer: DE9601051
(87) Internationale Veröffentlichungsnummer: WO9702707

(56) Entgegenhaltungen:
- EP-A- 0 576 289
- EP-A- 0 651 579
- EP-A- 0 710 028
- WO-A-96/06506
- WO-A-96/17478

## Beschreibung

Die heutigen Standards zur Komprimierung von Videodaten MPEG1 und MPEG2 arbeiten nach den Prinzipien der Prädiktion und Transformation. Es werden drei unterschiedlich kodierte Arten von Bildern unterschieden. Sog. I-Bilder (Intrakodierte Bilder) sind nur transformationskodiert. Als Transformation dient die Diskrete Kosinustransformation (DCT). P-Bilder werden aus dem jeweils vorangegangenen I-Bild oder P-Bild prädiziert. Die Differenz zwischen prädiziertem Bild und tatsächlichem Bild wird DCT-transformiert. Die dritte Art von Bildern sind die sog. B-Bilder, die bidirektional aus den jeweils vorangegangenen I-Bild oder P-Bild und aus dem jeweils nachfolgenden I-Bild oder P-Bild prädiziert werden. Wiederum wird die Differenz zwischen prädiziertem Bild und tatsächlichem Bild DCT-transformiert.

Ein MPEG-Dekoder muß also für die Rekonstruktion der B-Bilder die Daten zweier Bilder (I-Bild bzw. P-Bild) zur Verfügung stellen. Dementsprechend hoch ist der Bildspeicherbedarf.

Die grundsätzliche Arbeitsweise der Kompressionsverfahren MPEG1 bzw. MPEG2 ist dem Fachmann aus verschiedenen Veröffentlichungen bekannt (D.J. Le Gall, The MPEG Video Compression Algorithm, Signal Processing: Image Communication 4, S. 129-140, 1992; International Standard ISO/IEC 11172-2: Coding of Moving Pictures and Associated Audio, ISO/MPEG, 1993 und Draft International Standard ISO/IEC 13818-2, Generic Coding of Moving Pictures and Associated Audio, 25.3.1994, 1994).

Um die Qualität der Prädiktion in solchen Bildbereichen zu verbessern, in denen bewegte Objekte vorkommen, wird eine sog. bewegungskompensierte Prädiktion verwendet. Die Grundlagen der hierzu erforderlichen Bewegungsschätzung und ihre Anwendung zur bewegungskompensierten Prädiktion sind dem Fachmann z.B. aus (M. Bierling, Displacement estimation by hierarchical block machting, 3rd SPIE Symp. on Visual Communications, Cambridge, MA, Nov. 1988, 1988) und (Draft International Standard ISO/ICE 13818-2, Generic Coding of Moving Pictures and Associated Audio, 25.3.1994, 1994) bekannt.

Es werden drei unterschiedlich kodierte Arten von Bildern unterschieden. Sog. I-Bilder werden ohne zeitliche Prädiktion übertragen, sondern werden nur einer Intra-Bild-Kodierung, vorzugsweise einer DCT-Kodierung mit anschließender Quantisierung der Kodierungstransformationskoeffizienten, unterzogen. Dabei soll im Rahmen dieser Patentanmeldung unter "Intra-Bild-Kodierung" ganz allgemein jede zur Behandlung örtlicher Korrelationen in Bilddaten geeignete Methode verstanden werden. Die sog. P-Bilder werden mit Hilfe der DPCM-Schleife aus zeitlich vorhergehenden I-Bildern oder P-Bildern prädiziert (Vorwärts-Prädiktion). Die Differenz zwischen prädiziertem Bild und tatsächlichem Bild wird einer Intra-Bild-Kodierung, vorzugsweise einer DCT-Transformation mit anschließender Quantisierung der Kodierungstransformationskoeffizienten unterzogen. Zeitlich zwischen einem I-Bild und einem P-Bild oder zwischen zwei P-Bildern liegen sog. B-Bilder, welche im Rahmen der vorliegenden Patentanmeldung auch als interpolierte Bilder bezeichnet werden. B-Bilder werden durch (bidirektionale) bewegungskompensierte Interpolation aus einem zeitlich vorhergehenden I-Bild oder P-Bild und einem zeitlich nachfolgenden I-Bild oder P-Bild ermittelt. Dabei beziehen sich die Ausdrücke (zeitlich) "nachfolgend" bzw. "vorhergehend" nicht auf die Reihenfolge der Übertragung dieser Bilder im Videodatenstrom der komprimierten Bilder, sondern auf deren Aufnahme-/Wiedergabe-Reihenfolge. Ebenso wie P-Bilder, werden auch B-Bilder in Form von quantisierten Kodierungstransformationskoeffizienten eines Differenzbildes kodiert.

Zur Rekonstruktion eines B-Bildes durch bewegungskompensierte Interpolation aus einem zeitlich vorhergehenden I-Bild oder P-Bild und einem zeitlich nachfolgenden I-Bild oder P-Bild ist bei den derzeit bekannten Implementierungen eine Bereitstellung beider Referenzbilder (die in der Literatur gelegentlich auch als Stützbilder bezeichnet werden), in voll dekodierter Form erforderlich.

Es müssen also bei den zum Stand der Technik gehörenden Verfahren zur Durchführung der bewegungskompensierten Interpolation, wie sie beispielsweise aus EP-A-0 576 289 und EP-A-0 651 597 bekannt sind, zwei voll dekodierte Referenzbilder (I-Bilder oder P-Bilder) in einem Bildspeicher gespeichert werden.

Weitere Speicherkapazität ist für das Re-interlacing bei der Bildausgabe erforderlich. Der insgesamt notwendige Speicher ist ein entscheidender Kostenfaktor der zur Dekodierung und Enkodierung verwendeten Hardware. Eine Reduzierung des benötigten Speichervolumens ist also wünschenswert.

In dem nicht vorveröffentlichten Dokument WO-A-96/06505 wird ein Verfahren zur Decodierung komprimierter Video-Daten mit reduziertem Speicherplatzbedarf vorgeschlagen.

Der Erfindung liegt das Problem zugrunde, ein gegenüber dem bekannten Stand der Technik verbessertes Verfahren zur Dekodierung komprimierter Videodaten mit reduziertem Speicherbedarf anzugeben.

Das Problem wird durch das Verfahren gemäß Anspruch 1 gelöst.

Durch die Weiterbildungen des erfindungsgemäßen Verfahrens gemäß den Ansprüchen 2, 3, 4 und 5 wird eine weitere Einsparung des Speicherbedarfs erreicht.

Das Verfahren gemäß Anspruch 6 ermöglicht eine weitere erhebliche Einsparung des Speicherbedarfs, das durch die folgenden, von dem Anspruch 6 abhängigen Ansprüche noch verbessert wird, wobei aber die Bildqualität abhängig vom verwendeten Kompressionsverfahren eingeschränkt wird. Da die Lehre sowohl zum Dekodieren als auch zum Kodieren eines komprimierten Videodatenstroms geeignet ist, ist in Anspruch 11 ein Verfahren zum Kodieren eines komprimierten Videodatenstroms angegeben.

Die Unteransprüche des in Anspruch 11 beschriebenen Verfahrens ermöglichen jeweils eine weitere Einsparung des benötigten Speicherplatzbedarfs.

Die Erfindung ist in keiner Weise auf den Bereich der Transformationskodierung, erst recht nicht auf den Bereich der blockweisen DCT-Kodierung bzw. DCT-Dekodierung, beschränkt. Da über die Art der Intra-Bild-Kodierung keine voraussetzenden Annahmen gemacht werden müssen, ist die Erfindung im Zusammenhang mit praktisch allen bekannten oder zukünftig zu entwickelnden Methoden der Intra-Bild-Kodierung, z.B. auch im Zusammenhang mit der sog. Quadtree-Kodierung oder im Zusammenhang mit Methoden auf der Grundlage von Objektsegmenten, anwendbar. Die entscheidende Voraussetzung für die Anwendbarkeit der Erfindung ist die (bidirektionale) bewegungskompensierte Interpolation.

Im folgenden wird die Erfindung anhand bevorzugter Ausführungsbeispiele und mit Hilfe der Figuren näher beschrieben.

Es zeigen
- Figur 1: ein Blockdiagramm, daß das Verfahren gemäß Anspruch 1 beschreibt;
- Figur 2: eine Skizze, in der die benötigten dekodierten Bereiche der Referenzbilder dargestellt sind, die für die Rekonstruktion einer Makroblockzeile eines B-Bildes benötigt werden;
- Figur 3: ein Blockschaltbild, in dem das Verfahren gemäß Anspruch 6 skizziert ist;
- Figuren 4a, b: eine Skizze, in der die benötigten dekodierten Bereiche zur Rekonstruktion einer Makroblockzeile eines B-Bildes bei Verwendung des Verfahrens gemäß Anspruch 6 skizziert sind.

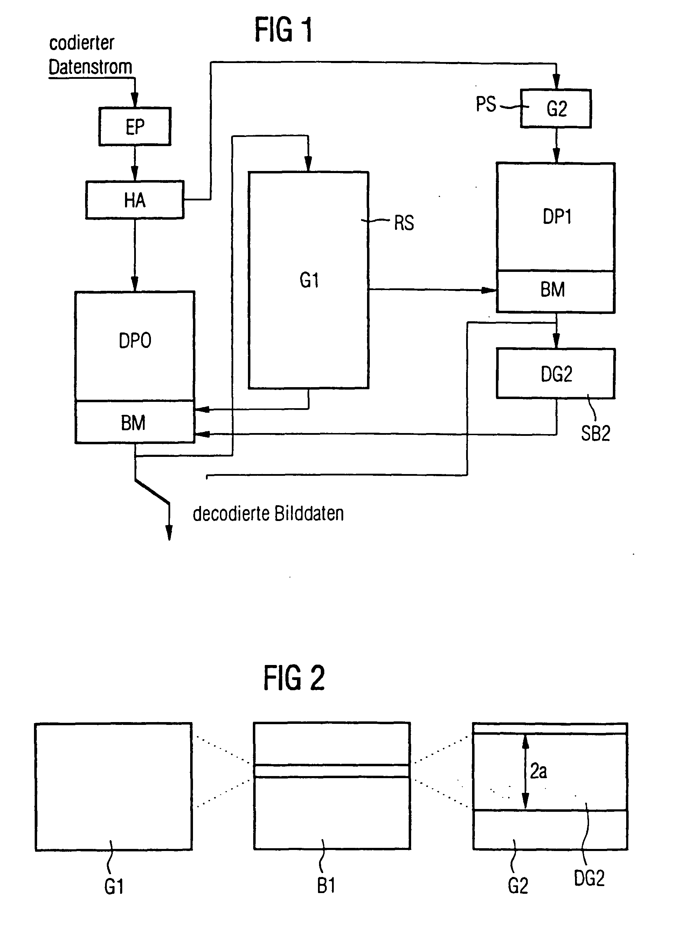

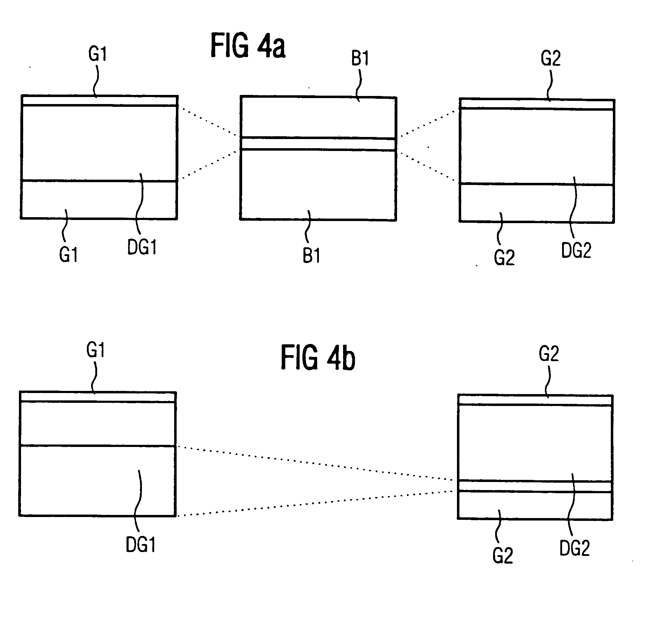

Anhand der Figuren 1 bis 4a, b wird die Erfindung weiter erläutert.

Im weiteren Rahmen dieser Patentanmeldung werden sowohl die I-Bilder als auch die P-Bilder als Grundbilder G bezeichnet. Die B-Bilder werden als interpolierte Bilder B bezeichnet.

In Figur 1 ist das Verfahren gemäß Anspruch 1 in Form eines Blockdiagramms skizziert.

Ein kodierter Datenstrom, der aus einer Folge von Grundbildern G und interpolierten Bildern B in kodierter Form besteht, wird zunächst in einen Eingangspuffer EP geladen. Der Eingangspuffer EP hat bei Verwendung des MPEG2-Verfahrens z.B. die Mindestgröße 1,75 Mbit, wobei ein Mbit 1024 ^{*} 1024 bit sind, also 1048576 bit.

Aus dem Eingangspuffer EP werden die Daten mit einer variablen, vom Dekoder gesteuerten Rate ausgelesen und einer Headerauswertung HA zugeführt. Durch die Headerauswertung HA wird bestimmt, um welche Art von Bild es sich bei dem empfangenen Bild handelt.

Ein erstes empfangenes Grundbild G1 wird in einem ersten Dekodierpfad DP0 dekodiert und in einem Referenzbildspeicher RS gespeichert.

Eine Einsparung des benötigten Speicherbedarfs ergibt sich, wenn ein zweites Grundbild G2 in komprimierter Form in einem Pufferspeicher PS gespeichert wird. Da jedoch zur Rekonstruktion eines interpolierten Bildes B wenigstens der zur Rekonstruktion notwendige Teil des zweiten Grundbildes G2 in unkomprimierter Form benötigt wird, muß jeweils, wie im späteren beschrieben wird, ein Teil des komprimiert gespeicherten zweiten Grundbildes G2 dekomprimiert werden. Um diesen Anteil der dekomprimierten Daten des zweiten Grundbildes G2 gering zu halten, wird die Tatsache genutzt, daß in den Standards MPEG1 und MPEG2 zur Videokodierung und Videodekodierung obere Schranken für den Suchbereich vorgegeben sind. Der Suchbereich bezeichnet den Bereich des zweiten Grundbildes G2, der zusammen mit dem ersten Grundbild G1 benötigt wird, um eine Makroblockzeile des interpolierten Bildes B zu rekonstruieren (vgl. Figur 2).

Die Idee ist, daß immer nur der Teil des zweiten Grundbildes G2 in einem zweiten Dekodierpfad DP1 dekodiert wird und in dekomprimierter Form (DG2) in einem zweiten Suchbereichspeicher SB2 gespeichert wird, auf den sich Bewegungsvektoren des gerade zu rekonstruierenden Teils des interpolierten Bildes B beziehen können. Das Verfahren kann auch zum Kodieren eingesetzt werden, was im weiteren erläutert wird.

Dies bedeutet, daß z. B. unter Verwendung einer Bewegungsschätzung BM des ersten Grundbildes G1 der entsprechende Teil des zweiten Grundbildes G2 dekomprimiert wird und in dem zweiten Suchbereichspeicher SB2 gespeichert wird.

Das erste Grundbild G1 wird also voll dekomprimiert in einem Referenzbildspeicher RS gespeichert. In einer weiteren Ausführungsform ist es auch möglich, wie im weiteren beschrieben, das erste Grundbild G1 in komprimierter Form zu speichern.

Das zweite Grundbild G2 wird in komprimierter Form in dem Pufferspeicher PS abgelegt. Der Pufferspeicher PS muß auf den "worst case" ausgelegt sein, d.h. er muß in seiner Speicherkapazität mindestens dem standardisierten "Video buffering verifier"-Puffer (VBV-Puffer) entsprechen. Im Falle von MPEG2 für digitales, hochauflösendes Fernsehen (HDTV) beträgt die Größe des VBV-Puffers etwa 9,4 Mbit (1 Mbit = 1024x1024 Bit).

Nun muß dafür gesorgt werden, daß jeweils der zu einem bestimmten Zeitpunkt erforderliche Suchbereich aus dem zweiten Grundbild G2 in dekomprimierter Form DG2 verfügbar ist. Für die Dekodierung einer Makroblockzeile eines ersten interpolierten Bildes B1 müssen dazu jeweils zwei a Makroblockzeilen des zweiten Grundbildes G2 in dekomprimierter Form DG2 vorliegen. Eine Makroblockzeile besteht aus horizontal aneinandergereihten Makroblöcken und zwei a Makroblockzeilen bilden den gesamten erforderlichen Suchbereich (vgl. Figur 2).

Der Suchbereich muß jeweils makroblock-zeilenweise mit den zu dekodierenden B-Bild-Makroblock-Zeilen verschoben werden. Die Dekodierung des Suchbereiches muß daher mit derselben Geschwindigkeit erfolgen wie die Dekodierung des ersten interpolierten Bildes B1. Der in dem zweiten Dekodierpfad DP1 jeweils dekomprimierte Teil DG2 des zweiten Grundbildes G2 wird jeweils mindestens für die Zeit, während der der Teil des ersten interpolierten Bildes B1 rekonstruiert wird, für den der jeweils dekomprimierte Teil DG2 des zweiten Grundbildes G2 benötigt wird, in dem zweiten Suchbereichspeicher SB2 gespeichert.

Anhand des in dem Referenzbildspeicher RS gespeicherten ersten Grundbildes G1 wird ein Teil DG2 des zweiten Grundbildes G2 dekomprimiert, der in dem zweiten Suchbereichspeicher SB2 gespeichert wird.

Gleichzeitig wird das erste Grundbild G1 ausgegeben. Nach Ausgabe des ersten Grundbildes G1 wird sofort mit der Dekodierung und Ausgabe des ersten interpolierten Bildes B1 über den ersten Dekodierpfad DP0 begonnen.

Die Dekodierung erfolgt nach der im vorigen beschriebenen Weise. Der für die Dekodierung der ersten Makroblockzeile nötige Suchbereich des zweiten Grundbildes G2 liegt, nachdem er über den zweiten Dekodierpfad DP1 dekomprimiert und in dem zweiten Suchbereichspeicher SB2 gespeichert wurde, im zweiten Suchbereichspeicher SB2 vor.

Während der Dekodierung des interpolierten Bildes B1 muß der Inhalt des zweiten Suchbereichspeichers SB2 ständig makroblock-zeilenweise über den zweiten Dekodierpfad DP1 aktualisiert werden. Bei der Aktualisierung des zweiten Suchbereichspeichers SB2, der den Suchbereich aus dem zweiten Grundbild G2 enthält, wird dazu auf den Referenzbildspeicher RS zugegriffen, in dem das erste Grundbild G1 gespeichert ist.

Um weiteren Speicherplatz und benötigte Rechenleistung einzusparen, kann während der Dekodierung der letzten a Makroblockzeilen des interpolierten Bildes B1 der zweite Suchbereichspeicher SB2 mit den ersten a Makroblockzeilen des zweiten Grundbildes G2 in dekomprimierter Form DG2 beschrieben werden. Diese werden benötigt, wenn ein zweites interpoliertes Bild aus dem ersten Grundbild G1 und dem zweiten Grundbild G2 rekonstruiert werden soll. Damit stehen wieder die Suchbereiche für die Dekodierung des nächsten interpolierten Bildes zur Verfügung.

Die Dekodierung nachfolgender interpolierter Bilder Bi, wobei i einen Index für eine beliebige Anzahl interpolierter Bilder bezeichnet, die auf Basis des ersten Grundbildes G1 und des zweiten Grundbildes G2 rekonstruiert wird, kann zyklisch nach dem im vorigen beschriebenen Verfahren durchgeführt werden.

Wie im vorigen beschrieben, kann also jeweils ein nicht mehr benötigter Teil des dekomprimierten Teils DG2 des zweiten Grundbildes G2 mit einem folgenden dekomprimierten Teil des zweiten Grundbildes G2 der zur Rekonstruktion eines folgenden Teils, also einer folgenden Makroblockzeile, des interpolierten Bildes Bl benötigt wird, in dem zweiten Suchbereichspeicher SB2 überschrieben werden. Wie im vorigen beschrieben, kann auch ein letzter Teil eines zur Rekonstruktion eines vorangegangenen interpolierten Bildes nicht mehr benötigter Endteil des dekomprimierten Teils DG2 des zweiten Grundbildes G2 in dem zweiten Suchbereichspeicher SB2 überschrieben werden mit einem Anfangsteil des dekomprimierten Teils DG2 des zweiten Grundbildes G2, der benötigt wird zur Rekonstruktion eines ersten Teils eines nachfolgenden interpolierten Bildes B2.

Wird ein weiteres Grundbild G3 empfangen, so wird das zweite Grundbild G2 vollständig dekomprimiert und in dem Referenzbildspeicher RS gespeichert. Da zur vollständigen Dekomprimierung des zweiten Grundbildes G2 das erste Grundbild G1 benötigt wird, muß dieses ebenso noch in dem Referenzbildspeicher RS gespeichert werden, bis das zweite Grundbild G2 dekomprimiert wurde.

Um weiteren Speicherplatzbedarf einzusparen ist es jedoch möglich, sukzessive den Teil des ersten Grundbildes G1, der nicht mehr zur Dekomprimierung des zweiten Grundbildes G2 benötigt wird, mit schon dekomprimierten Teilen des zweiten Grundbildes G2 zu überschreiben.

Das weitere Grundbild G3 wird in dem Pufferspeicher PS gespeichert. Somit kann ein neuer "Zyklus" des im vorigen beschriebenen Verfahrens beginnen.

Bei allen im vorigen beschriebenen Verfahren können Schritte zum Übertragen von Daten und damit eine Einsparung benötigter Datenbewegung erreicht werden, wenn der Referenzbildspeicher RS und der zweite Suchbereichsspeicher SB2 als ein physikalischer Speicher realisiert sind, da in diesem Fall kein Umkopieren der Daten von dem zweiten Suchbereichsspeicher SB2 in den Referenzbildspeicher RS nötig ist.

Um den benötigten Speicherplatzbedarf noch weiter zu reduzieren, ist es auch möglich, das erste Grundbild G1 in komprimierter Form in dem Referenzbildspeicher RS abzulegen. In diesem Fall kann der Referenzbildspeicher RS kleiner dimensioniert werden als in dem Verfahren, in dem das erste Grundbild G1 in voll dekomprimierter Form in dem Referenzbildspeicher RS gespeichert wird.

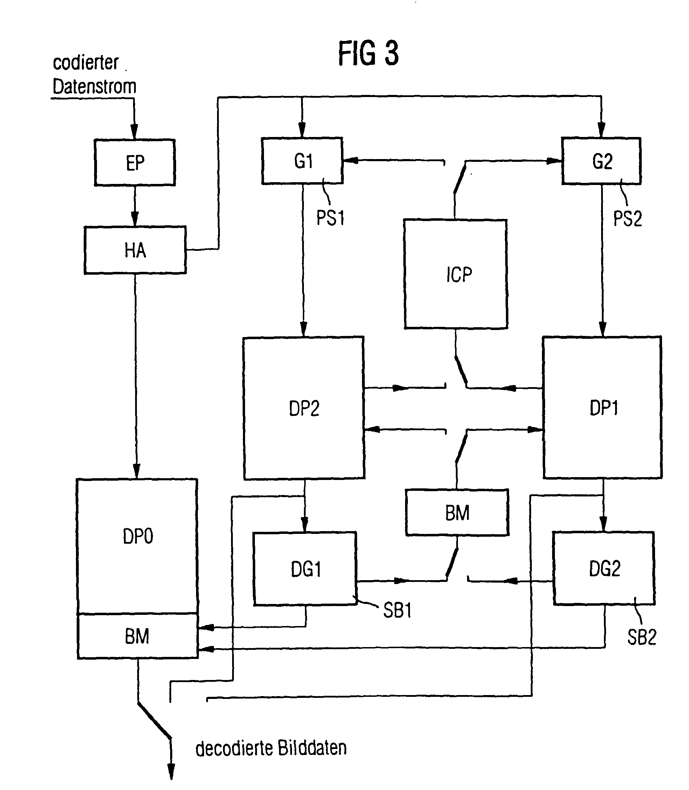

In diesem Fall wird über einen dritten Dekodierpfad DP2 der Teil des ersten Grundbildes G1 jeweils dekomprimiert und in einem ersten Suchbereichspeicher SB1 abgelegt, der jeweils für die Rekonstruktion des Teils des interpolierten Bildes B1 benötigt wird (vgl. Figur 3). Somit wird jeweils ein Teil des ersten interpolierten Bildes B1 anhand des jeweils dekomprimierten Teils DG1 des ersten Grundbildes G1, der sich in dem ersten Suchbereichspeicher SB1 befindet, und anhand des dekomprimierten Teils DG2 des zweiten Grundbildes G2, der sich in dem zweiten Suchbereichspeicher SB2 befindet, rekonstruiert.

Ein nicht mehr benötigter Teil des dekomprimierten Teils DG1 des ersten Grundbildes G1 wird erneut komprimiert in einem Intra-Kodierpfad ICP. Ebenso wird ein nicht mehr benötigter Teil des dekomprimierten Teils DG2 des zweiten Grundbildes G2 erneut komprimiert in dem Intra-Kodierpfad ICP.

"Nicht mehr benötigt" bedeutet in diesem Zusammenhang, daß der Teil nicht mehr zur Rekonstruktion des aktuellen Teils des ersten interpolierten Bildes B1 benötigt wird.

Die Vorgehensweise bei der Rekonstruktion mehrerer interpolierter Bilder Bi aufgrund des ersten Grundbildes G1 und des zweiten Grundbildes G2 ist entsprechend der im vorigen beschriebenen Vorgehensweise.

Auch die Vorgehensweise bei Empfang eines weiteren Grundbildes G3 ist im vorigen beschrieben worden und wird im Zusammenhang mit dem Verfahren, wenn sowohl das erste Grundbild G1 als auch das zweite Grundbild G2 in komprimierter Form gespeichert werden, entsprechend angewendet.

In dem Intra-Kodierpfad ICP wird für den jeweils zu bearbeitenden Teil die Kodierungstransformation angewendet, mit der der gesamte Videodatenstrom kodiert, d.h. komprimiert, wurde.

In Figur 4a ist für das Verfahren mit der Speicherung des ersten Grundbildes G1 und des zweiten Grundbildes G2 in komprimierter Form der jeweils benötigte Suchbereich zur Rekonstruktion des ersten interpolierten Bildes B1 dargestellt.

Wenn es sich bei dem zweiten Grundbild G2 um ein P-Bild handelt, muß zusätzlich der erforderliche Suchbereich aus dem vorangegangenen Referenzbild, also dem ersten Grundbild G1, dekodiert vorliegen. Dazu genügen weitere a Makroblockzeilen zuzüglich einer Makroblockzeile des ersten Grundbildes G1, da sich die Suchbereiche zur Rekonstruktion des interpolierten Bildes B1 und zur Dekodierung des zweiten Grundbildes G2 überlappen (vgl. Figur 4b). Der Suchbereich zur Dekodierung des zweiten Grundbildes G2 überlappt sich mit dem benötigten Suchbereich zur Rekonstruktion des interpolierten Bildes B1 genau um a Makroblockzeilen.

Auch in diesem Fall ist es möglich, weiteren Speicherbedarf zu reduzieren, indem z.B. der nicht mehr benötigte Teil des dekomprimierten Teils DG1 des ersten Grundbildes G1 mit einem folgenden dekomprimierten Teil des ersten Grundbildes G1, der zur Rekonstruktion eines folgenden Teils des ersten interpolierten Bildes B1 benötigt wird, im ersten Suchbereichspeicher SB1 überschrieben wird. Ebenso kann auch der nicht mehr benötigte Teil des dekomprimierten Teils DG2 des zweiten Grundbildes G2 mit einem folgenden dekomprimierten Teil des zweiten Grundbildes G2, der zur Rekonstruktion des folgenden Teils des ersten interpolierten Bildes B1 benötigt wird, im zweiten Suchbereichspeicher SB2 überschrieben werden.

Entsprechend kann auch, falls mehrere interpolierte Bilder Bi anhand des ersten Grundbildes G1 und des zweiten Grundbildes G2 rekonstruiert werden, jeweils ein zur Rekonstruktion eines letzten Teils eines vorangegangenen interpolierten Bildes nicht mehr benötigter End-Teil des dekomprimierten Teils DG1 des ersten Grundbildes G1 in dem ersten Suchbereichspeicher SB1 überschrieben werden mit einem Anfangsteil des dekomprimierten Teils DG1 des ersten Grundbildes G1, der benötigt wird zur Rekonstruktion eines ersten Teils eines nachfolgenden interpolierten Bildes.

Ebenso kann auch ein zur Rekonstruktion des letzten Teils des vorangegangenen interpolierten Bildes nicht mehr benötigter Endteil des dekomprimierten Teils DG2 des zweiten Grundbildes G2 in dem zweiten Suchbereichspeicher SB2 überschrieben werden mit einem Anfangsteil des dekomprimierten Teils DG2 des zweiten Grundbildes G2, der benötigt wird zur Rekonstruktion des ersten Teils des nachfolgenden interpolierten Bildes.

Bei Empfang eines weiteren Grundbildes G3 wird das erste Grundbild G1 vollständig dekomprimiert und das zweite Grundbild G2 in komprimierter Form in den Referenzbildspeicher RS gespeichert und das weitere Grundbild G3 in komprimierter Form in dem Pufferspeicher PS gespeichert.

Da der Videodatenstrom aus einer Folge von Grundbildern und interpolierten Bildern besteht, wird dieses Verfahren zyklisch für alle Bilder des gesamten Videodatenstroms durchgeführt.

Die im vorigen beschriebenen Prinzipien zur Dekodierung komprimierter Videodatenströme können entsprechend übertragen werden auf ein Verfahren zum iterativen Kodieren komprimierter Videodatenströme, die ebenso eine Folge von Grundbildern G und interpolierten Bildern B aufweisen.

Bei der Kodierung des Videodatenstroms wird ein erstes Grundbild G1 in dem Referenzbildspeicher RS gespeichert. Das zweite Grundbild G2 wird in komprimierter Form in einem Ausgangspuffer abgelegt. Entsprechend der im vorigen beschriebenen Vorgehensweise wird für die Konstruktion jeweils eines interpolierten Bildes B1 nur ein für die Konstruktion des Teils des ersten interpolierten Bildes B1 benötigter Teil des komprimierten zweiten Grundbildes G2 dekomprimiert DG2 und für die Zeit, während der der Teil des ersten interpolierten Bildes B1 konstruiert wird, in einem zweiten Suchbereichspeicher SB2 abgelegt.

Anhand des ersten Grundbildes G1 und des dekomprimierten Teils des zweiten Grundbildes G2, der sich in dem zweiten Suchbereichspeicher SB2 befindet, wird jeweils der Teil, also die Makroblockzeile, des ersten interpolierten Bildes B1 konstruiert. Möglichkeiten zur Einsparung des Speicherplatzbedarfs, z.B. durch Überschreiben nicht mehr benötigter Teile des dekomprimierten Teils DG2 des zweiten Grundbildes G2 in dem zweiten Suchbereichspeicher SB2 wurden im vorigen beschrieben und sind in dem Verfahren zur Kodierung ebenso anwendbar. Entsprechendes gilt bei der Konstruktion mehrerer interpolierter Bilder Bi anhand des ersten Grundbildes G1 und des zweiten Grundbildes G2.

Wenn auch das erste Grundbild G1 in komprimierter Form in dem Referenzbildspeicher RS gehalten wird, muß auch jeweils der Teil DG1 des ersten Grundbildes G1 dekomprimiert werden, der für die Konstruktion des Teils des interpolierten Bildes B1 benötigt wird. Während der Zeit der Konstruktion des interpolierten Bildes B1 wird der zur Konstruktion des interpolierten Bildes B1 benötigte Teil des ersten Grundbildes G1 in einem ersten Suchbereichspeicher SB1 gespeichert. Somit kann der Teil des ersten interpolierten Bildes B1 anhand des dekomprimierten Teils DG1 des ersten Grundbildes G1 und des dekomprimierten Teils DG2 des zweiten Grundbildes G2 konstruiert werden.

Wie im vorigen beschrieben, muß der benötigte Suchbereich makroblock-zeilenweise mit den zu kodierenden Makroblockzeilen des ersten interpolierten Bildes B1, das konstruiert wird, verschoben werden.

Wenn das erste Grundbild G1 an eine Empfängereinheit übertragen wird, wird das zweite Grundbild G2 in dem Referenzbildspeicher RS gespeichert, und ein weiteres Grundbild G3 in komprimierter Form in dem Ausgangspuffer A abgelegt.

Das im vorigen beschriebene Verfahren wird, da der gesamte Videodatenstrom auch bei der Kodierung mehrere Grundbilder sowie mehrere interpolierte Bilder aufweist, zyklisch für den gesamten Videodatenstrom durchgeführt.

## Patentansprüche

1. Verfahren zum iterativen Decodieren komprimierter Videodatenströme, die eine Folge von Grundbildern (G) und interpolierten Bildern (B) aufweisen,
- bei dem ein erstes dekodiertes Grundbild (G1) in einem Referenzbildspeicher (RS) gespeichert wird,
- bei dem ein zweites Grundbild (G2) in komprimierter Form in einem Pufferspeicher (PS) gespeichert wird,
- bei dem für eine Rekonstruktion mindestens eines ersten aus dem ersten und dem zweiten Grundbild interpolierten Bildes (B1) folgende Schritte vorgesehen werden, die iterativ jeweils zur Rekonstruktion eines interpolierten Bildes ausgeführt werden:
-- jeweils nur ein für die Rekonstruktion eines Teils des ersten interpolierten Bildes (B1) benötigter Teil des zweiten Grundbildes (G2) wird dekomprimiert (DG2),
-- der dekomprimierte Teil (DG2) des zweiten Grundbildes (G2) wird für eine Zeit, während der der Teil des ersten interpolierten Bildes (B1) rekonstruiert wird, in einem zweiten Suchbereichsspeicher (SB2) gespeichert, und
-- der Teil des interpolierten Bildes (B1) wird anhand des ersten Grundbildes (G1) und des aus dem zweiten Suchbereichsspeicher dekomprimierten Teils (DG2) des zweiten Grundbildes (G2) rekonstruiert.

2. Verfahren nach Anspruch 1, bei dem ein nicht mehr benötigter Teil des dekomprimierten Teils des zweiten Grundbildes (DG2) mit einem folgenden dekomprimierten Teil des zweiten Grundbildes (DG2), der zur Rekonstruktion eines folgenden Teils des ersten interpolierten Bildes (B1) benötigt wird, in dem zweiten Suchbereichsspeicher (SB2) überschrieben wird.

3. Verfahren nach Anspruch 1 oder 2, bei dem ein zur Rekonstruktion eines letzten Teils eines vorangegangenen interpolierten Bildes nicht mehr benötigter End-Teil des dekomprimierten Teils (DG2) des zweiten Grundbildes (G2) in dem zweiten Suchbereichsspeicher (SB2) überschrieben wird mit einem Anfangs-Teil des dekomprimierten Teils (DG2) des zweiten Grundbildes (G2), der benötigt wird zur Rekonstruktion eines ersten Teils eines nachfolgenden interpolierten Bildes.

4. Verfahren nach einem der Ansprüche 1 bis 3, bei dem das erste Grundbild (G1) vollständig dekomprimiert in dem Referenzbildspeicher (RS) gespeichert wird.

5. Verfahren nach Anspruch 4,
- bei dem bei Empfang eines weiteren Grundbildes (G3) das zweite Grundbild (G2) vollständig dekomprimiert wird,
- bei dem das vollständig dekomprimierte zweite Grundbild (DG2) in dem Referenzbildspeicher (RS) gespeichert wird, und
- bei dem das weitere Grundbild (G3) in komprimierter Form in dem Pufferspeicher (PS) gespeichert wird.

6. Verfahren nach einem der Ansprüche 1 bis 5, bei dem ein physikalischer Speicher verwendet wird zur Realisierung des Referenzbildspeichers (RS) und des zweiten Suchbereichsspeichers (SB2).

7. Verfahren nach einem der Ansprüche 1 bis 3 oder nach Anspruch 6,
- bei dem das erste Grundbild (G1) in komprimierter Form in dem Referenzbildspeicher (RS) gespeichert wird,
- bei dem für die Rekonstruktion des mindestens ersten interpolierten Bildes (B1) folgende zusätzliche Schritte vorgesehen werden, die iterativ jeweils zur Rekonstruktion eines interpolierten Bildes ausgeführt werden:
-- jeweils nur ein für die Rekonstruktion eines Teils des ersten interpolierten Bildes (B1) benötigter Teil des ersten Grundbildes (G1) wird dekomprimiert (DG1),
-- der dekomprimierte Teil (DG1) des ersten Grundbildes (G1) wird für eine Zeit, während der der Teil des ersten interpolierten Bildes (B1) rekonstruiert wird, in einem ersten Suchbereichsspeicher (SB1) gespeichert, A
-- der Teil des ersten interpolierten Bildes (B1) wird anhand des dekomprimierten Teil (DG1) des ersten Grundbildes (G1) und des dekomprimierten Teils (DG2) des zweiten Grundbildes (G2) rekonstruiert,
-- der dekomprimierte Teil (DG1) des ersten Grundbildes (G1) wird komprimiert,
-- der komprimierte Teil des ersten Grundbildes (G1) wird in dem Referenzbildspeicher (RS) gespeichert,
-- der dekomprimierte Teil des zweiten Grundbildes (DG2) wird komprimiert, und
-- der komprimierte Teil des zweiten Grundbildes (G2) wird in dem Pufferspeicher (PS) gespeichert.

8. Verfahren nach Anspruch 7, bei dem ein nicht mehr benötigter Teil des dekomprimierten Teils (DG1) des ersten Grundbildes (G1) mit einem folgenden dekomprimierten Teil des ersten Grundbildes (DG1) , der zur Rekonstruktion eines folgenden Teils des ersten interpolierten Bildes (B1) benötigt wird, im ersten Suchbereichsspeicher (SB1) überschrieben wird.

9. Verfahren nach Anspruch 7 oder 8, bei dem ein zur Rekonstruktion eines letzten Teils eines vorangegangenen interpolierten Bildes nicht mehr benötigter End-Teil des dekomprimierten Teils (DG1) des ersten Grundbildes (G1) in dem ersten Suchbereichsspeicher (SB1) überschrieben wird mit einem Anfangs-Teil des dekomprimierten Teils (DG1) des ersten Grundbildes (G1), der benötigt wird zur Rekonstruktion eines ersten Teils eines nachfolgenden interpolierten Bildes.

10. Verfahren nach einem der Ansprüche 7 bis 9,
- bei dem bei Empfang eines weiteren Grundbildes (G3) das erste Grundbild (G1) vollständig dekomprimiert wird,
- bei dem das zweite Grundbild in komprimierter Form in dem Referenzbildspeicher (RS) gespeichert wird, und
- bei dem das weitere Grundbild (G3) in komprimierter Form in dem Pufferspeicher (PS) gespeichert wird.

11. Verfahren zum iterativen Codieren komprimierter Videodatenströme, die eine Folge von Grundbildern (G) und interpolierten Bildern (B) aufweisen,
- bei dem ein erstes dekodiertes Grundbild (G1) in einem Referenzbildspeicher (RS) gespeichert wird,
- bei dem ein unkomprimiertes zweites Grundbild (G2) komprimiert (G2) wird,
- bei dem das komprimierte zweite Grundbild (G2) in einem Ausgangspuffer gespeichert wird,
- bei dem für eine Konstruktion mindestens eines ersten aus dem ersten und dem zweiten Grundbild interpolierten Bildes (B1) folgende Schritte vorgesehen werden, die iterativ jeweils zur Konstruktion eines interpolierten Bildes ausgeführt werden:
-- jeweils nur ein für die Konstruktion eines Teils des ersten interpolierten Bildes (B1) benötigter Teil des komprimierten zweiten Grundbildes (G2) wird dekomprimiert (DG2),
-- der dekomprimierte Teil (DG2) des zweiten Grundbildes (G2) wird für eine Zeit, während der der Teil des ersten interpolierten Bildes (B1) konstruiert wird, in einem zweiten Suchbereichsspeicher (SB2) gespeichert, und
-- der Teil des ersten interpolierten Bildes (B1) wird anhand des ersten Grundbildes (G1) und des aus dem Zweiten Suchbereichsspeicher ausgelesensor dekomprimierten Teils (DG2) des zweiten Grundbildes (G2) konstruiert.

12. Verfahren nach Anspruch 11, bei dem ein nicht mehr benötigter Teil des dekomprimierten Teils (DG2) des zweiten Grundbildes (G2) mit einem folgenden dekomprimierten Teil des zweiten Grundbildes (DG2), der zur Konstruktion eines folgenden Teils des ersten interpolierten Bildes (B1) benötigt wird, überschrieben wird.

13. Verfahren nach Anspruch 11 oder 12, bei dem ein zur Konstruktion eines letzten Teils eines vorangegangenen interpolierten Bildes nicht mehr benötigter End-Teil des dekomprimierten Teils (DG2) des zweiten Grundbildes (G2) in dem zweiten Suchbereichsspeicher (SB2) überschrieben wird mit einem Anfangs-Teil des zweiten Grundbildes (DG2), der benötigt wird zur Konstruktion eines ersten Teils eines nachfolgenden interpolierten Bildes.

14. Verfahren nach einem der Ansprüche 11 bis 13, bei dem das erste Grundbild (G1) in unkomprimierter Form in dem Referenzbildspeicher (RS) gespeichert wird.

15. Verfahren nach Anspruch 14,
- bei dem , wenn das erste Grundbild (G1) an eine Empfängereinheit übertragen wird, das zweite Grundbild (G2) vollständig dekomprimiert wird,
- bei dem das dekomprimierte zweite Grundbild (G2) in dem Referenzbildspeicher (RS) gespeichert wird, und
- bei dem ein weiteres Grundbild (G3) in komprimierter Form in dem Ausgangspuffer gespeichert wird.

16. Verfahren nach einem der Ansprüche 1 bis 13,
- bei dem das erste Grundbild (G1) komprimiert wird,
- bei dem das komprimierte erste Grundbild (G1) in dem Referenzbildspeicher (RS) gespeichert wird,
- bei dem für die Konstruktion des mindestens ersten interpolierten Bildes (B1) folgende zusätzliche Schritte vorgesehen werden, die iterativ jeweils zur Konstruktion eines interpolierten Bildes ausgeführt werden:
-- jeweils nur ein für die Konstruktion eines Teils des ersten interpolierten Bildes (B1) benötigter Teil des komprimierten ersten Grundbildes (G1) wird dekomprimiert (DG1),
-- der dekomprimierte Teil (DG1) des ersten Grundbildes (G1) wird für eine Zeit, während der der Teil des ersten interpolierten Bildes (B1) konstruiert wird, in einem ersten Suchbereichsspeicher (SB1) gespeichert, und
-- der Teil des interpolierten Bildes (B1) wird anhand des unkomprimierten ersten Grundbildes (G1) und des dekomprimierten Teils (DG2) des zweiten Grundbildes (G2) konstruiert.

17. Verfahren nach Anspruch 15, bei dem ein nicht mehr benötigter Teil des dekomprimierten Teils (DG1) des ersten Grundbildes (G1) mit einem folgenden dekomprimierten Teil des ersten Grundbildes (G1), der zur Konstruktion eines folgenden Teils des ersten interpolierten Bildes (B1) benötigt wird, überschrieben wird.

18. Verfahren nach Anspruch 16 oder 17, bei dem ein zur Konstruktion eines letzten Teils eines vorangegangenen interpolierten Bildes nicht mehr benötigter End-Teil des dekomprimierten Teils (DG1) des ersten Grundbildes (G1) in dem ersten Suchbereichsspeicher (SB1) überschrieben wird mit einem Anfangs-Teil des ersten Grundbildes, der benötigt wird zur Konstruktion eines ersten Teils eines nachfolgenden interpolierten Bildes.

19. Verfahren nach einem der Ansprüche 16 bis 18, bei dem , wenn das erste Grundbild (G1) an eine Empfängereinheit übertragen wird, ein weiteres Grundbild (G3) in komprimierter Form in dem ersten Ausgangspuffer gespeichert wird.

## Claims

1. Method for the iterative decoding of compressed video data streams which have a sequence of basic pictures (G) and interpolated pictures (B),
- in which a first decoded basic picture (G1) is stored in a reference picture memory (RS),
- in which a second basic picture (G2) is stored in compressed form in a buffer memory (PS),
- in which the following steps are provided for a reconstruction of at least a first picture (B1) interpolated from the first and second basic pictures, which steps are executed iteratively in each case for the reconstruction of an interpolated picture:
-- only a part of the second basic picture (G2) which is required for the reconstruction of a part of the first interpolated picture (B1) is decompressed (DG2) in each case,
-- the decompressed part (DG2) of the second basic picture (G2) is stored in a second search area memory (SB2) during a time in which the part of the first interpolated picture (B1) is reconstructed, and
-- the part of the interpolated picture (B1) is reconstructed using the first basic picture (G1) and the decompressed part (DG2), from the second search area memory, of the second basic picture (G2).

2. Method according to Claim 1, in which a no longer required part of the decompressed part of the second basic picture (DG2) is overwritten in the second search area memory (SB2) by a following decompressed part, of the second basic picture (DG2), which is required for the reconstruction of a following part of the first interpolated picture (B1).

3. Method according to Claim 1 or 2, in which an end part, which is no longer required for the reconstruction of a last part of a preceding interpolated picture, of the decompressed part (DG2) of the second basic picture (G2) is overwritten in the second search area memory (SB2) by a beginning part of the decompressed part (DG2), of the second basic picture (G2), which is required for the reconstruction of a first part of a subsequent interpolated picture.

4. Method according to one of Claims 1 to 3, in which the first basic picture (G1) is stored in completely decompressed form in the reference picture memory (RS).

5. Method according to Claim 4,
- in which, in the event of a further basic picture (G3) being received, the second basic picture (G2) is completely decompressed,
- in which the completely decompressed second basic picture (DG2) is stored in the reference picture memory (RS), and
- in which the further basic picture (G3) is stored in compressed form in the buffer memory (PS).

6. Method according to one of Claims 1 to 5, in which one physical memory is used to realize the reference picture memory (RS) and the second search area memory (SB2).

7. Method according to one of Claims 1 to 3 or according to Claim 6,
- in which the first basic picture (G1) is stored in compressed form in the reference picture memory (RS),
- in which the following additional steps are provided for the reconstruction of the at least first interpolated picture (B1), which steps are executed iteratively in each case for the reconstruction of an interpolated picture:
-- only a part of the first basic picture (G1) which is required for the reconstruction of a part of the first interpolated picture (B1) is decompressed (DG1) in each case,
-- the decompressed part (DG1) of the first basic picture (G1) is stored in a first search area memory (SB1) during a time in which the part of the first interpolated picture (B1) is reconstructed,
-- the part of the first interpolated picture (B1) is reconstructed using the decompressed part (DG1) of the first basic picture (G1) and the decompressed part (DG2) of the second basic picture (G2),
-- the decompressed part (DG1) of the first basic picture (G1) is compressed,
-- the compressed part of the first basic picture (G1) is stored in the reference picture memory (RS),
-- the decompressed part of the second basic picture (DG2) is compressed, and
-- the compressed part of the second basic picture (G2) is stored in the buffer memory (PS).

8. Method according to Claim 7, in which a no longer required part of the decompressed part (DG1) of the first basic picture (G1) is overwritten in the first search area memory (SB1) by a following decompressed part, of the first basic picture (DG1), which is required for the reconstruction of a following part of the first interpolated picture (B1).

9. Method according to Claim 7 or 8, in which an end part, which is no longer required for the reconstruction of a last part of a preceding interpolated picture, of the decompressed part (DG1) of the first basic picture (G1) is overwritten in the first search area memory (SB1) by a beginning part of the decompressed part (DG1), of the first basic picture (G1), which is required for the reconstruction of a first part of a subsequent interpolated picture.

10. Method according to one of Claims 7 to 9,
- in which, in the event of a further basic picture (G3) being received, the first basic picture (G1) is completely decompressed,
- in which the second basic picture is stored in compressed form in the reference picture memory (RS), and
- in which the further basic picture (G3) is stored in compressed form in the buffer memory (PS).

11. Method for the iterative coding of compressed video data streams which have a sequence of basic pictures (G) and interpolated pictures (B),
- in which a first decoded basic picture (G1) is stored in a reference picture memory (RS),
- in which an uncompressed second basic picture (G2) is compressed (G2),
- in which the compressed second basic picture (G2) is stored in an output buffer,
- in which the following steps are provided for a construction of at least a first picture (B1) interpolated from the first and second basic pictures, which steps are executed iteratively in each case for the construction of an interpolated picture:
-- only a part of the compressed second basic picture (G2) which is required for the construction of a part of the first interpolated picture (B1) is decompressed (DG2) in each case,
-- the decompressed part (DG2) of the second basic picture (G2) is stored in a second search area memory (SB2) during a time in which the part of the first interpolated picture (B1) is constructed, and
-- the part of the first interpolated picture (B1) is constructed using the first basic picture (G1) and the decompressed part (DG2), read from the second search area memory, of the second basic picture (G2).

12. Method according to Claim 11, in which a no longer required part of the decompressed part (DG2) of the second basic picture (G2) is overwritten by a following decompressed part, of the second basic picture (DG2), which is required for the construction of a following part of the first interpolated picture (B1).

13. Method according to Claim 11 or 12, in which an end part, which is no longer required for the construction of a last part of a preceding interpolated picture, of the decompressed part (DG2) of the second basic picture (G2) is overwritten in the second search area memory (SB2) by a beginning part, of the second basic picture (DG2), which is required for the construction of a first part of a subsequent interpolated picture.

14. Method according to one of Claims 11 to 13, in which the first basic picture (G1) is stored in uncompressed form in the reference picture memory (RS).

15. Method according to Claim 14,
- in which, when the first basic picture (G1) is transmitted to a receiver unit, the second basic picture (G2) is completely decompressed,
- in which the decompressed second basic picture (G2) is stored in the reference picture memory (RS), and
- in which a further basic picture (G3) is stored in compressed form in the output buffer.

16. Method according to one of Claims 1 to 13,
- in which the first basic picture (G1) is compressed,
- in which the compressed first basic picture (G1) is stored in the reference picture memory (RS),
- in which the following additional steps are provided for the construction of the at least first interpolated picture (B1), which steps are executed iteratively in each case for the construction of an interpolated picture:
-- only a part of the compressed first basic picture (G1) which is required for the construction of a part of the first interpolated picture (B1) is decompressed (DG1) in each case,
-- the decompressed part (DG1) of the first basic picture (G1) is stored in a first search area memory (SB1) during a time in which the part of the first interpolated picture (B1) is constructed, and
-- the part of the interpolated picture (B1) is constructed using the uncompressed first basic picture (G1) and the decompressed part (DG2) of the second basic picture (G2).

17. Method according to Claim 15, in which a no longer required part of the decompressed part (DG1) of the first basic picture (G1) is overwritten by a following decompressed part, of the first basic picture (G1), which is required for the construction of a following part of the first interpolated picture (B1).

18. Method according to Claim 16 or 17, in which an end part, which is no longer required for the construction of a last part of a preceding interpolated picture, of the decompressed part (DG1) of the first basic picture (G1) is overwritten in the first search area memory (SB1) by a beginning part, of the first basic picture, which is required for the construction of a first part of a subsequent interpolated picture.

19. Method according to one of Claims 16 to 18, in which, when the first basic picture (G1) is transmitted to a receiver unit, a further basic picture (G3) is stored in compressed form in the first output buffer.

## Revendications

1. Procédé pour le décodage itératif de flux de données vidéo comprimés qui comportent une suite d'images de base (G) et d'images interpolées (B),
- dans lequel on mémorise dans une mémoire d'image de référence (RS) une première image de base (G1) décodée,
- dans lequel on mémorise une deuxième image de base (G2) sous forme comprimée dans une mémoire tampon (PS),
- dans lequel, pour une reconstruction d'au moins une première image interpolée (B1) à partir de la première image de base et de la deuxième image de base, on prévoit les étapes suivantes qui sont exécutées de façon itérative à chaque fois pour la reconstruction d'une image interpolée :
-- on décomprime (DG2) à chaque fois seulement une partie, nécessaire à la reconstruction d'une partie de la première image interpolée (B1), de la deuxième image de base (G2),
-- on mémorise la partie décomprimée (DG2) de la deuxième image de base (G2) dans une deuxième mémoire de zone de recherche (SB2) pour un temps pendant lequel on reconstruit la partie de la première image interpolée (B1), et
-- on reconstruit la partie de l'image interpolée (B1) à l'aide de la première image de base (G1) et à l'aide de la partie décomprimée (DG2), issue de la deuxième mémoire de zone de recherche, de la deuxième image de base (G2).

2. Procédé selon la revendication 1, dans lequel on recouvre dans la deuxième mémoire de zone de recherche (SB2) une partie devenue inutile de la partie décomprimée (DG2) de la deuxième image de base avec une partie décomprimée suivante (DG2), nécessaire à la reconstruction d'une partie suivante de la première image interpolée (B1), de la deuxième image de base.

3. Procédé selon la revendication 1 ou 2, dans lequel on recouvre dans la deuxième mémoire de zone de recherche (SB2) une partie finale, devenue inutile à la reconstruction d'une dernière partie d'une image interpolée précédente, de la partie décomprimée (DG2) de la deuxième image de base (G2) avec une partie initiale, nécessaire à la reconstruction d'une première partie d'une image interpolée suivante, de la partie décomprimée (DG2) de la deuxième image de base (G2).

4. Procédé selon l'une des revendications 1 à 3, dans lequel on mémorise la première image de base (G1) complètement décomprimée dans la mémoire d'image de référence (RS).

5. Procédé selon la revendication 4,
- dans lequel, lors de la réception d'une autre image de base (G3), on décomprime complètement la deuxième image de base (G2),
- dans lequel on mémorise la deuxième image de base complètement décomprimée (DG2) dans la mémoire d'image de référence (RS) et
- dans lequel on mémorise l'autre image de base (G3) sous forme comprimée dans la mémoire tampon (PS).

6. Procédé selon l'une des revendications 1 à 5, dans lequel une mémoire physique est utilisée pour mettre en oeuvre la mémoire d'image de référence (RS) et la deuxième mémoire de zone de recherche (SB2).

7. Procédé selon l'une des revendications 1 à 3 ou selon la revendication 6,
- dans lequel on mémorise la première image de base (G1) sous forme comprimée dans la mémoire d'image de référence (RS),
- dans lequel, pour la reconstruction d'au moins la première image interpolée (B1), on prévoit les étapes supplémentaires suivantes qui sont exécutées de façon itérative à chaque fois pour la reconstruction d'une image interpolée :
-- on décomprime (DG1) à chaque fois seulement une partie, nécessaire à la reconstruction d'une partie de la première image interpolée (B1), de la première image de base (G1),
-- on mémorise dans une première mémoire de zone de recherche (SB1) la partie décomprimée (DG1) de la première image de base (G1) pour un temps pendant lequel on reconstruit la partie de la première image interpolée (B1),
-- on reconstruit la partie de la première image interpolée (B1) à l'aide de la partie décomprimée (DG1) de la première image de base (G1) et à l'aide de la partie décomprimée (DG2) de la deuxième image de base (G2),
-- on comprime la partie décomprimée (DG1) de la première image de base (G1),
-- on mémorise la partie comprimée de la première image de base (G1) dans la mémoire d'image de référence (RS),
-- on comprime la partie décomprimée (DG2) de la deuxième image de base, et
-- on mémorise la partie comprimée de la deuxième image de base (G2) dans la mémoire tampon (PS).

8. Procédé selon la revendication 7, dans lequel on recouvre dans 1a, première mémoire de zone de recherche (SB1) une partie devenue inutile de la partie décomprimée (DG1) de la première image de base (G1) avec une partie décomprimée suivante (DG1) de la première image de base qui est nécessaire à la reconstruction d'une partie suivante de la première image interpolée (B1).

9. Procédé selon la revendication 7 ou 8, dans lequel on recouvre dans la première mémoire de zone de recherche (SB1) une partie finale, devenue inutile à la reconstruction d'une dernière partie d'une image interpolée précédente, de la partie décomprimée (DG1) de la première image de base (G1) avec une partie initiale de la partie décomprimée (DG1) de la première image de base (G1) qui est nécessaire à la reconstruction d'une première partie d'une image interpolée suivante.

10. Procédé selon l'une des revendications 7 à 9,
- dans lequel, lors de la réception d'une autre image de base (G3), on décomprime complètement la première image de base (G1),
- dans lequel on mémorise la deuxième image de base sous forme comprimée dans la mémoire d'image de référence (RS), et
- dans lequel on mémorise l'autre image de base (G3) sous forme comprimée dans la mémoire tampon (PS).

11. Procédé pour le codage itératif de flux de données vidéo comprimés qui comportent une suite d'images de base (G) et d'images interpolées (B),
- dans lequel on mémorise dans une mémoire d'image de référence (RS) une première image de base (G1) décodée,
- dans lequel on comprime (G2) une deuxième image de base (G2) non comprimée,
- dans lequel on mémorise la deuxième image de base (G2) comprimée dans un tampon de sortie,
- dans lequel, pour une construction d'au moins une première image interpolée (B1) à partir de la première image de base et de la deuxième image de base, on prévoit les étapes suivantes qui sont exécutées de façon itérative à chaque fois pour la construction d'une image interpolée :
-- on décomprime (DG2) à chaque fois seulement une partie, nécessaire à la construction d'une partie de la première image interpolée (B1), de la deuxième image de base (G2) comprimée,
-- on mémorise la partie décomprimée (DG2) de la deuxième image de base (G2) dans une deuxième mémoire de zone de recherche (SB2) pour un temps pendant lequel on construit la partie de la première image interpolée (B1), et
-- on construit la partie de la première image interpolée (B1) à l'aide de la première image de base (G1) et à l'aide de la partie décomprimée (DG2), lue dans la deuxième mémoire de zone de recherche, de la deuxième image de base (G2).

12. Procédé selon la revendication 11, dans lequel on recouvre une partie devenue inutile de la partie décomprimée (DG2) de la deuxième image de base (G2) avec une partie décomprimée suivante (DG2) de la deuxième image de base qui est nécessaire à la construction d'une partie suivante de la première image interpolée (B1).

13. Procédé selon la revendication 11 ou 12, dans lequel on recouvre dans la deuxième mémoire de zone de recherche (SB2) une partie finale, devenue inutile à la construction d'une dernière partie d'une image interpolée précédente, de la partie décomprimée (DG2) de la deuxième image de base (G2) avec une partie initiale de la deuxième image de base (DG2) qui est nécessaire à la construction d'une première partie d'une image interpolée suivante.

14. Procédé selon l'une des revendications 11 à 13, dans lequel on mémorise la première image de base (G1) sous forme non comprimée dans la mémoire d'image de référence (RS).

15. Procédé selon la revendication 14,
- dans lequel, lorsque la première image de base (G1) est transmise à une unité de récepteur, on décomprime complètement la deuxième image de base (G2),
- dans lequel on mémorise la deuxième image de base (G2) complètement décomprimée dans la mémoire d'image de référence (RS) et
- dans lequel on mémorise une autre image de base (G3) sous forme comprimée dans le tampon de sortie.

16. Procédé selon l'une des revendications 1 à 13,
- dans lequel on comprime la première image de base (G1),
- dans lequel on mémorise la première image de base (G1) comprimée dans la mémoire d'image de référence (RS),
- dans lequel, pour la construction d'au moins la première image interpolée (B1), on prévoit les étapes supplémentaires suivantes qui sont exécutées de façon itérative à chaque fois pour la construction d'une image interpolée :
-- on décomprime (DG1) à chaque fois seulement une partie, nécessaire à la construction d'une partie de la première image interpolée (B1), de la première image de base (G1) comprimée,
-- on mémorise dans une première mémoire de zone de recherche (SB1) la partie décomprimée (DG1) de la première image de base (G1) pour un temps pendant lequel on construit la partie de la première image interpolée (B1), et
-- on construit la partie de l'image interpolée (B1) à l'aide de la première image de base (G1) non comprimée et à l'aide de la partie décomprimée (DG2) de la deuxième image de base (G2).

17. Procédé selon la revendication 15, dans lequel on recouvre une partie devenue inutile de la partie décomprimée (DG1) de la première image de base (G1) avec une partie décomprimée suivante de la première image de base (G1) qui est nécessaire à la construction d'une partie suivante de la première image interpolée (B1).

18. Procédé selon la revendication 16 ou 17, dans lequel on recouvre dans la première mémoire de zone de recherche (SB1) une partie finale, devenue inutile à la construction d'une dernière partie d'une image interpolée précédente, de la partie décomprimée (DG1) de la première image de base (G1) avec une partie initiale de la première image de base qui est nécessaire à la construction d'une première partie d'une image interpolée suivante.

19. Procédé selon l'une des revendications 16 à 18, dans lequel, lorsque la première image de base (G1) est transmise à une unité de récepteur, on mémorise une autre image de base (G3) sous forme comprimée dans le premier tampon de sortie.
